(19)

Europäisches
Patentamt
European
Patent Office
Office européen
des brevets

(11) **EP 4 030 509 A1**

(12) **EUROPEAN PATENT APPLICATION**
published in accordance with Art. 153(4) EPC

(43) Date of publication:
**20.07.2022 Bulletin 2022/29**

(21) Application number: **20863483.2**

(22) Date of filing: **03.09.2020**

(51) International Patent Classification (IPC):
*H01M 4/62* (2006.01)     *H01M 10/052* (2010.01)
*H01M 10/0562* (2010.01)   *H01B 1/06* (2006.01)
*H01B 1/10* (2006.01)

(52) Cooperative Patent Classification (CPC):
**H01B 1/06; H01B 1/10; H01M 4/62; H01M 10/052;
H01M 10/0562;** Y02E 60/10

(86) International application number:
**PCT/JP2020/033444**

(87) International publication number:
**WO 2021/049416 (18.03.2021 Gazette 2021/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.09.2019 JP 2019165782**

(71) Applicant: **Mitsui Mining & Smelting Co., Ltd.
Shinagawa-ku
Tokyo 141-8584 (JP)**

(72) Inventors:
• **TAKAHASHI, Tsukasa
Ageo-shi, Saitama 362-0021 (JP)**
• **CHIKUMOTO, Takashi
Ageo-shi, Saitama 362-0021 (JP)**
• **OGATA, Yoichiro
Ageo-shi, Saitama 362-0021 (JP)**

(74) Representative: **Novagraaf Technologies
Bâtiment O2
2, rue Sarah Bernhardt
CS90017
92665 Asnières-sur-Seine Cedex (FR)**

(54) **SULFIDE SOLID-STATE ELECTROLYTE, ELECTRODE MIXTURE, SOLID-STATE BATTERY AND SULFIDE-SOLID-STATE-ELECTROLYTE MANUFACTURING METHOD**

(57)     Provided is a sulfide solid electrolyte that can reduce the reaction resistance between an active material and the sulfide solid electrolyte. A sulfide solid electrolyte having a weight loss rate of 2.6% or more and 9.6% or less, the percentage of weight loss rate being measured by heating the sulfide solid from 25°C to 400°C at a heating rate of 10°C/min in thermogravimetry. It is preferable that this sulfide solid electrolyte contains elemental lithium (Li), elemental phosphorus (P), elemental sulfur (S), an elemental halogen (X), and elemental oxygen (O). Also, this sulfide solid electrolyte is favorably produced by mixing a sulfide solid electrolyte with a compound that contains water of crystallization.

EP 4 030 509 A1

**Description**

Technical Field

The present invention relates to a sulfide solid electrolyte. Also, the present invention relates to an electrode mixture and a solid-state battery that contain the sulfide solid electrolyte. Furthermore, the present invention relates to a method for producing the sulfide solid electrolyte.

Background Art

Currently, many lithium ion secondary batteries use electrolytic solutions that contain flammable organic solvents. By contrast, solid-state batteries use solid electrolytes instead of electrolytic solutions and do not contain flammable organic solvents, and it is hoped that solid-state batteries will be put to practical use as batteries that are safe and have high energy densities.

As a type of solid electrolyte that is used in a solid-state battery, a sulfide solid electrolyte has been researched. However, there is a problem with a solid-state battery that contains a sulfide solid electrolyte in that, as the solid-state battery is charged and discharged, reaction resistance between an electrode active material and the sulfide solid electrolyte increases and thus limits transportation of lithium ions. It is believed that the reason for this is that a resistive layer is formed at an interface between the active material and the sulfide solid electrolyte due to the reaction therebetween. To address this problem, attempts have been made to restrain an increase in reaction resistance by coating the surface of the electrode active material with a specific compound (Patent Literatures 1 to 3).

Citation List

Patent Literature

     Patent Literature 1: JP 2012-99323A
     Patent Literature 2: US 2014/072875A1
     Patent Literature 3: JP 2015-201388A

Summary of Invention

The technologies disclosed in the above-listed patent literatures adopt an approach for restraining an increase in the reaction resistance between the active material and the sulfide solid electrolyte by modifying the surface of the active material. However, these literatures do not consider an approach for restraining an increase in the reaction resistance by modifying the surface of the sulfide solid electrolyte.

Therefore, an object of the present invention is to provide a sulfide solid electrolyte that can restrain an increase in the reaction resistance between an active material and the sulfide solid electrolyte.

The present invention provides sulfide solid electrolyte having a weight loss rate of 2.7% or more and 9.6% or less, the weight loss rate being measured by heating the sulfide solid from 25°C to 400°C at a heating rate of 10°C/min in thermogravimetry.

Description of Embodiments

Hereinafter, the present invention will be described based on preferred embodiments thereof. The present invention relates to a solid electrolyte. The solid electrolyte of the present invention contains a sulfide solid electrolyte. The sulfide solid electrolyte (hereinafter also referred to simply as "solid electrolyte") has lithium ionic conductivity. The level of the lithium ionic conductivity of the solid electrolyte of the present invention will be described later.

The solid electrolyte of the present invention contains elemental sulfur (S) as a constituent element thereof. The lithium ionic conductivity of the solid electrolyte of the present invention results from the sulfide solid electrolyte. Various sulfide solid electrolytes that have lithium ionic conductivity are known in the art, and those various sulfide solid electrolytes can be used in the present invention without limitation. In particular, from the viewpoint of reducing the reaction resistance between the sulfide solid electrolyte and an active material, it is advantageous that the sulfide solid electrolyte contains elemental lithium (Li), elemental phosphorus (P), elemental sulfur (S), an elemental halogen (X), and elemental oxygen (O). From the viewpoint of reducing the reaction resistance between the sulfide solid electrolyte and an active material even further, it is advantageous that the elemental halogen (X) contains at least one of, for example, elemental fluorine (F), elemental chlorine (Cl), elemental bromine (Br), and elemental iodine (I). Such a sulfide solid electrolyte may also contain another element in addition to elemental lithium, elemental phosphorus, elemental sulfur, and the elemental halogen. For example, a portion of elemental lithium may be replaced with another elemental alkali metal, a portion of elemental phosphorus may be replaced with another elemental pnictogen, and a portion of elemental sulfur may be replaced with another elemental chalcogen.

When the solid electrolyte of the present invention is measured by thermogravimetry, a reduction in weight is observed. Specifically, when the solid electrolyte of the present invention is heated from 25°C to 400°C, a reduction in weight is observed. The reaction resistance between an active material and a solid electrolyte in which such a reduction in weight is observed is lower than that of a conventional sulfide solid electrolyte. Therefore, a solid-state battery that contains the solid electrolyte of the present invention has a high discharge capacity and favorable discharge rate characteristics.

Detailed reasons why the solid electrolyte of the present invention can reduce the reaction resistance between an active material and the solid electrolyte are not known, but, for example, the following is conceivable. First, when a reduction in weight is observed under predetermined conditions, the sulfide solid electrolyte contains a substance whose weight can be reduced under the predetermined conditions. An example of such a substance is a hydrate. Here, a case will be described in which a reduction in weight observed in the above-described temperature range is originated from a hydrate.

When a reduction in weight observed in thermogravimetry that is performed on the solid electrolyte of the present invention under predetermined conditions is derived from a hydrate, or in other words, when the solid electrolyte of the present invention contains a hydrate, the reaction resistance between the solid electrolyte and an active material can be reduced. It is conceivable that the reason for this is as follows. As a result of a hydrate or a portion of a hydrate coming into contact with a sulfide solid electrolyte, a coating is formed on the surface of the sulfide solid electrolyte, and the thus formed coating allows the sulfide solid electrolyte to come into good contact with an active material. Although a hydrate is taken as an example here, the inventors of the present invention think that the above-described effects can also be expected when the substance that causes a reduction in weight is a substance other than a hydrate.

In the present invention, the sulfide solid electrolyte has a weight loss rate of 2.7% or more and 9.6% or less, the weight loss rate being measured by heating the sulfide solid from 25°C to 400°C at a heating rate of 10°C/min in thermogravimetry. When a reduction in weight of the solid electrolyte of the present invention that is observed in thermogravimetry under predetermined conditions is derived from a hydrate, the weight loss rate of the solid electrolyte when heated within a predetermined temperature range is preferably 2.7% or more and 9.6% or less. Here, the term "predetermined temperature range" is preferably a temperature range in which a hydrate volatilizes, and may be, for example, 50°C or more, or 100°C or more. On the other hand, the "predetermined temperature range" may be, for example, 300°C or less, 250°C or less, 200°C or less, or 170°C or less. Note that the reduction in weight of a hydrate is particularly significant during heating from 100°C to 170°C.

The weight loss rate of the solid electrolyte of the present invention when heated from 100°C to 170°C in thermogravimetry that is performed at a heating rate of 10°C/min is preferably 1.0% or more and to 4.7% or less. The weight loss rate is, for example, more preferably 1.5% or more, and even more preferably 1.8% or more. On the other hand, the weight loss rate is, for example, more preferably 4.6% or less. It is preferable that the weight loss rate that occurs under the predetermined conditions is within the above-described range, because the effects of the present invention can be even more markedly realized.

From the viewpoint of even more markedly realizing the above-described advantageous effects, the weight loss rate (expressed in "wt%") of the solid electrolyte of the present invention when heated from 25°C to 400°C in thermogravimetry is 2.7% or more and 9.6% or less. The weight loss rate is, for example, preferably 3.0% or more, more preferably 4.0% or more, even more preferably 5.0% or more, and yet even more preferably 6.0% or more. On the other hand, the weight loss rate is, for example, preferably 9.0% or less, more preferably 8.5% or less, and even more preferably 8.0% or less. It is preferable that the weight loss rate is within the above-described range, because the reaction resistance between the sulfide solid electrolyte and the active material is reduced even further.

The weight loss rate is calculated using the following equation (1):

$$\text{Weight loss rate (wt\%)} = (W_{25} - W_{400})/W_{25} \times 100 \quad (1)$$

wherein $W_{25}$ represents the weight (g) of a specimen at 25°C, and $W_{400}$ represents the weight (g) of the specimen at 400°C.

Thermogravimetry is performed at a heating rate of 10°C/min, and is preferably performed in an Ar atmosphere. For example, TG-DTA2000SA (product name) manufactured by MAC Science Ltd. can be used to perform the measurement. The sulfide solid electrolyte prior to the measurement is stored in an environment with a dew point of -50°C or less in order to restrain an increase in the amount of weight loss.

As described above, it is preferable that the solid electrolyte of the present invention contains elemental Li, elemental P, elemental S, and an elemental halogen (X). When the solid electrolyte of the present invention contains a lithium halide hydrate, the type of the elemental X that constitutes the sulfide solid electrolyte and the type of the elemental X that constitutes the lithium halide hydrate may be the same or different from each other. Preferably, the elemental X that constitutes the lithium halide hydrate is one or two or more of, for example, elemental F, elemental Cl, elemental Br, and elemental I. In addition, the number of waters of hydration contained in the lithium halide hydrate may be, for example, one, or two or more. As a result of research by the inventors of the present invention, it was confirmed that satisfactory results can be obtained by using a monohydrate.

There is no particular limitation on the method for obtaining the solid electrolyte of the present invention, and, for example, any method can be used as long as a sulfide solid electrolyte whose weight can be reduced under the predetermined conditions specified in the present invention can be obtained. An example is a method with which a sulfide solid electrolyte containing a compound that volatilizes when heated under the predetermined conditions is obtained. Specifically, a method can be used with which a sulfide solid electrolyte containing a compound that contains water of crystallization is obtained. In the present invention, after the solid electrolyte of the present invention is obtained by adding the compound, a grinding step may be performed as necessary. There is no particular limitation on the grinding means, and a known grinding means such as, for example, a ball mill or a bead mill can be used.

There is no particular limitation on the compound that contains water of crystallization, and various compounds can be used as long as the compounds do not impair the properties of the sulfide solid electrolyte. As a hydrated salt of an organic compound, any hydrated salts of common organic compounds can be used without limitation. An example thereof is a hydrated salt of a carboxylic acid. Examples of the hydrated salt of a carboxylic acid include: straight-chain saturated fatty acids, such as hydrated salts of formic, acetic, propionic, butyric, valeric, caproic, enanthic, capric, pelargonic, lauric, myristic, palmitic, stearic, eicosanoic, behenic, montanic, and triacontanoic acids; fatty acid derivatives, such as a hydrated salt of 1,2-hydroxystearic acid; aliphatic dicarboxylic acids, such as hydrated salts of oxalic, fumaric, maleic, succinic, glutaric, adipic, pimelic, suberic, azelaic, sebacic, undecanedioic, and dodecanedioic acids; hydroxy acids, such as hydrated salts of glycolic, lactic, hydroxybutyric, tartaric, malic, citric, isocitric, and mevalonic acids; aromatic carboxylic acids, such as hydrated salts of benzoic, terephthalic, isophthalic, orthophthalic, pyromellitic, trimellitic, xylylenedicarboxylic, and naphthalenedicarboxylic acids; and the like.

On the other hand, as a hydrated salt of an inorganic compound, any hydrated salts of common inorganic compounds can be used without limitation. Examples include: halide hydrates, oxide hydrates, nitride hydrates, carbide hydrates, boride hydrates, and the like. Of these hydrates, hydrates that contain an alkali metal are preferable, and a halide hydrate that contains an alkali metal is particularly preferable. One type of these compounds may be used alone, or two or more types may be used in combination. When the solid electrolyte of the present invention contains a compound that contains water of crystallization, the compound that contains water of crystallization is preferably contained in a ratio that can effectively reduce the reaction resistance. The ratio of the compound is, for example, preferably more than 0 mass%, more preferably 5 mass% or more, and even more preferably 10 mass% or more. On the other hand, the ratio of the compound is, for example, preferably less than 50 mass%, more preferably 45 mass% or less, and even more preferably 40 mass% or less.

A particularly preferable sulfide solid electrolyte that can be used in the present invention is a material that contains a crystalline phase having an argyrodite-type crystal structure, from the viewpoint of reducing the reaction resistance between the sulfide solid electrolyte and the active material even further. An argyrodite-type crystal structure refers to a crystal structure possessed by a group of compounds derived from a mineral represented by the chemical formula $Ag_8GeS_6$. From the viewpoint of reducing the reaction resistance between the sulfide solid electrolyte and the active material yet even further, it is particularly preferable that the sulfide solid electrolyte having an argyrodite-type crystal structure has a crystal structure belonging to that of cubic crystals.

In the sulfide solid electrolyte that contains a crystalline phase having an argyrodite-type crystal structure, one or two or more elements of, for example, elemental F, elemental Cl, elemental Br, and elemental I can be used as the elemental halogen contained in the sulfide solid electrolyte. From the viewpoint of improving ionic conductivity, it is particularly preferable to use a combination of elemental Cl and elemental Br as the elemental halogen.

From the viewpoint of improving the ionic conductivity even more, it is particularly preferable that the sulfide solid electrolyte that contains a crystalline phase having an argyrodite-type crystal structure is, for example, a compound represented by the compositional formula (I): $Li_aPS_bX_c$, wherein X represents at least one of elemental fluorine (F), elemental chlorine (Cl), elemental bromine (Br), and elemental iodine (I). Preferably, X is one or both of elemental chlorine (Cl) and elemental bromine (Br).

In the above-described compositional formula (I), a represents the molar ratio of elemental lithium and is preferably from 3.0 to 6.5, more preferably from 3.5 to 6.3, and even more preferably from 4.0 to 6.0. When a is within this range, the cubic argyrodite-type crystal structure is stable at temperatures near room temperature (25°C), and the lithium ionic conductivity can be improved.

In the compositional formula (I), b represents a value indicating how much smaller the amount of the $Li_2S$ component is than that in the stoichiometric composition. It is preferable that b is from 3.5 to 5.5, more preferably from 4.0 to 5.3, and even more preferably from 4.2 to 5.0, because the cubic argyrodite-type crystal structure is stable at temperatures near room temperature (25°C), and the lithium ionic conductivity is improved.

In the compositional formula (I), c is preferably from 0.1 to 3.0, more preferably from 0.5 to 2.5, and even more preferably from 1.0 to 1.8.

Alternatively, the sulfide solid electrolyte that contains a crystalline phase having an argyrodite-type crystal structure may also be, for example, a compound represented by the compositional formula (II): $Li_{7-d}PS_{6-d}X_d$. A composition represented by the compositional formula (II) is the stoichiometric composition of an argyrodite-type crystalline phase. In the compositional formula (II), X is as defined in the compositional formula (I).

In the compositional formula (II), d is preferably from 0.4 to 2.2, more preferably from 0.8 to 2.0, and even more preferably from 1.2 to 1.8.

Furthermore, the sulfide solid electrolyte that contains a crystalline phase having an argyrodite-type crystal structure may also be, for example, a compound represented by the compositional formula (III): $Li_{7-d-2e}PS_{6-d-e}X_d$. An argyrodite-type crystalline phase that has a composition represented by the formula (III) is, for example, produced by the reaction of an argyrodite-type crystalline phase that has a composition represented by the formula (II) with $P_2S_5$ (diphosphorus pentasulfide). The reaction equation is as follows:

$$Li_{7-d}PS_{6-d}X_d + y/3P_2S_5 \rightarrow Li_{7-d-2e}PS_{6-d-e}X_d + 2y/3Li_3PS_4$$

As indicated by the reaction equation, a $Li_3PS_4$ phase is produced along with the argyrodite-type crystalline phase represented by the compositional formula (III). In addition, there are cases where a trace amount of a LiX phase is produced, where X is at least one of elemental fluorine (F), elemental chlorine (Cl), elemental bromine (Br), and elemental iodine (I). In the compositional formula (III), X and d are as defined in the compositional formula (II).

In the compositional formula (III), e is a value that indicates a deviation of the $Li_2S$ component from the stoichiometric composition represented by the compositional formula (II). e is preferably from -0.9 to (-d+2), more preferably from -0.6 to (-d+1.6), and even more preferably from -0.3 to (-d+1.0).

In the compositional formula (I), (II), or (III), a portion of P may be replaced with at least one element, or two or more elements, of Si, Ge, Sn, Pb, B, Al, Ga, As, Sb, and Bi. In this case, the compositional formula (I) becomes $Li_a(P_{1-y}M_y)S_bX_c$, the compositional formula (II) becomes $Li_{7-d}(P_{i-y}M_y)S_{6-d}X_d$, and the compositional formula (III) becomes $Li_{7-d-2e}(P_{1-y}M_y)S_{6-d-e}X_d$. M is one or two or more elements selected from Si, Ge, Sn, Pb, B, Al, Ga, As, Sb, and Bi. y is preferably from 0.01 to 0.7, more preferably from 0.02 to 0.4, and even more preferably from 0.05 to 0.2.

Whether or not a sulfide solid electrolyte contains a crystalline phase that has an argyrodite-type crystal structure can be confirmed by performing XRD measurement, for example. That is to say, in an XRD measurement that is performed with an X-ray diffractometer (XRD) using CuKα1 radiation, a crystalline phase having an argyrodite-type structure has characteristic peaks at 2θ = 15.34° ± 1.00°, 17.74° ± 1.00°, 25.19° ± 1.00°, 29.62° ± 1.00°, 30.97° ± 1.00°, 44.37° ± 1.00°, 47.22° ± 1.00°, and 51.70° ± 1.00°. Furthermore, a crystalline phase having an argyrodite-type structure also has characteristic peaks at, for example, 2θ = 54.26° ± 1.00°, 58.35° ± 1.00°, 60.72° ± 1.00°, 61.50° ± 1.00°, 70.46° ± 1.00°, and 72.61° ± 1.00°. On the other hand, if a sulfide solid electrolyte does not contain a crystalline phase having an argyrodite-type structure, this can be confirmed by checking that the sulfide solid electrolyte does not have the peaks characteristic of a crystalline phase having an argyrodite-type structure.

A sulfide solid electrolyte having an argyrodite-type crystal structure means that the sulfide solid electrolyte has at least a crystalline phase having an argyrodite-type structure. In the present invention, it is preferable that the sulfide solid electrolyte has a crystalline phase having an argyrodite-type structure as the main phase. The term "main phase" refers to a phase that occupies the largest proportion of the total amount of all of the crystalline phases constituting the sulfide solid electrolyte. Accordingly, the proportion of the crystalline phase having an argyrodite-type structure contained in the sulfide solid electrolyte to all of the crystalline phases constituting the sulfide solid electrolyte is, for example, preferably 60 mass% or more, or in particular, more preferably 70 mass% or more, 80 mass% or more, or 90 mass% or more. The proportion of a crystalline phase can be confirmed through XRD, for example.

The solid electrolyte of the present invention is in the form of powder, which is a collection of particles. From the viewpoint of improving the ionic conductivity, the cumulative volume particle diameter $D_{50}$ at a cumulative volume of 50 vol% of the solid electrolyte of the present invention as measured through particle size distribution analysis using a laser diffraction and scattering method is, for example, preferably 0.1 μm or more, more preferably 0.3 μm or more, and even more preferably 0.5 μm or more. On the other hand, the cumulative volume particle size $D_{50}$ of the solid electrolyte of the present invention is, for example, preferably 20 μm or less, more preferably 10 μm or less, and even more preferably 5 μm or less. It is preferable that the sulfide solid electrolyte has a cumulative volume particle size $D_{50}$ of 0.1 μm or more, because an excessive increase in the total surface area of the powder made of the sulfide solid electrolyte is restrained, and therefore, the occurrence of problems such as an increase in resistance and an increase in difficulty in mixing the solid electrolyte with an active material can be effectively restrained. On the other hand, it is preferable that the sulfide solid electrolyte has a cumulative volume particle size $D_{50}$ of 20 μm or less, because when, for example, the solid electrolyte of the present invention is used in a combination with another solid electrolyte, the solid electrolyte of the present invention can easily fit into gaps and the like of the other solid electrolyte. As a result, the contact points between the solid electrolytes increase, and the contact areas therebetween also increase, so that the ionic conductivity can be effectively improved.

The solid electrolyte of the present invention exhibits a high lithium ionic conductivity value of preferably 4.0 mS/cm or more, more preferably 4.5 mS/cm or more, and even more preferably 5.0 mS/cm or more at room temperature (25°C). The lithium ionic conductivity is measured using the following method. A sulfide solid electrolyte is formed in a ceramic cylinder (having a diameter of 10 mm) through uniaxial pressing within a glove box purged with a sufficiently dried Ar gas (having a dew point of -60°C or less). The formed sulfide solid electrolyte is sandwiched between hard-chromium-plated SUS punches having a diameter of 10 mm, the punches respectively being placed on upper and lower surfaces of the solid electrolyte and serving as electrodes. The sulfide solid electrolyte and the punches are fixed at four points using M6-size bolts and nuts with a tightening torque of 6 N·m. Thus, an ionic conductivity measurement sample in which the sulfide solid electrolyte has a thickness of 0.4 to 1.0 mm is prepared. The ionic conductivity of the sample is measured using a frequency response analyzer Model 1260A manufactured by Solartron. The measurement is performed using an AC impedance method under conditions at a temperature of 25°C and over a frequency range from 0.1 Hz to 1 MHz.

The solid electrolyte of the present invention can be used, for example, as a material that constitutes a solid electrolyte layer, or in an electrode mixture that contains an active material and constitutes a solid electrolyte layer. Specifically, the solid electrolyte can be used in a positive electrode mixture that contains a positive electrode active material and constitutes a positive electrode layer, or in a negative electrode mixture that contains a negative electrode active material and constitutes a negative electrode layer. Therefore, the solid electrolyte of the present invention can be used in a battery having a solid electrolyte layer, or a so-called solid-state battery. More specifically, the solid electrolyte can be used in a lithium solid-state battery. The lithium solid-state battery may be a primary battery or a secondary battery, but it is particularly preferable that the solid electrolyte is used in a lithium secondary battery. Note that the term "solid-state battery" encompasses, in addition to a solid-state battery that does not contain any liquid substance or gel substance as the electrolyte, a battery that contains a liquid substance or a gel substance as the electrolyte in an amount of, for example, 50 mass% or less, 30 mass% or less, or 10 mass% or less.

The solid electrolyte layer of the present invention can be produced using, for example, a method in which a slurry containing the sulfide solid electrolyte, a binder, and a solvent is dripped onto a substrate and leveled off with a doctor blade or the like; a method in which the substrate and the slurry are brought into contact with each other, followed by cutting with an air knife; a method in which a coating is formed through screen printing or the like, and then the solvent is removed through heat drying; or other methods. Alternatively, the solid electrolyte layer can also be produced by pressing a powder of the solid electrolyte of the present invention and then performing appropriate processing. The solid electrolyte layer of the present invention may also contain another solid electrolyte, in addition to the solid electrolyte of the present invention. Typically, the thickness of the solid electrolyte layer of the present invention is preferably from 5 to 300 μm, and more preferably from 10 to 100 μm.

The above-described solid-state battery has a positive electrode layer, a negative electrode layer, and a solid electrolyte layer located between the positive electrode layer and the negative electrode layer, and contains the solid electrolyte of the present invention. Examples of the shape of the battery include the shapes of laminate-type, cylindrical, and rectangular batteries.

As the active material contained in the positive electrode mixture, for example, an active material that is used as a positive electrode active material in a lithium secondary battery can be used as appropriate. Examples of such a positive electrode active material include a spinel-type lithium transition metal compound, a lithium metal oxide having a layered structure, and the like. Particles of the positive electrode active material may have on their surfaces a coating layer that can reduce the reaction resistance between the sulfide solid electrolyte and the positive electrode active material. However, according to the present invention, the reaction resistance between the sulfide solid electrolyte and an active material can be reduced without forming a coating layer on the surfaces of particles of the active material, and there is no need to actively form a coating layer on the surfaces of the active material particles. The positive electrode mixture may also contain other materials, including a conductive assistant, in addition to the positive electrode active material.

As the active material contained in the negative electrode mixture, for example, an active material that is used as a negative electrode active material in a lithium secondary battery can be used as appropriate. Examples of such a negative electrode active material include lithium metals, carbon materials such as artificial graphite, natural graphite, and non-graphitizable carbon (hard carbon), silicon, silicon compounds, tin, tin compounds, and the like. The negative electrode mixture may also contain other materials, including a conductive assistant, in addition to the negative electrode active material.

Examples

Hereinafter, the present invention will be described in greater detail by means of examples. However, the scope of the present invention is not limited to the examples below.

Example 1

(1) Production of Solid Electrolyte

A $Li_2S$ powder, a $P_2S_5$ powder, a LiCl powder, and a LiBr powder were weighed so that the total amount of the powders was 75 g and the composition $Li_{5.4}PS_{4.4}Cl_{0.8}Br_{0.8}$ was realized. These powders were ground and mixed using a ball mill to obtain a powder mixture. The powder mixture was fired to obtain a fired product having the composition above. The firing was performed using a tubular electric furnace. During the firing, 100% pure hydrogen sulfide gas was circulated in the electric furnace at 1.0 L/min. The firing temperature was set to 500°C, and the firing was performed for 4 hours. The fired product was disintegrated using a mortar and a pestle, and subsequently ground using a wet bead mill to obtain a solid electrolyte. As a result of XRD measurement, it was confirmed that this solid electrolyte had a crystalline phase of an argyrodite-type structure.
The obtained solid electrolyte was mixed with $LiBr \cdot H_2O$ in an Ar atmosphere to obtain an intended solid electrolyte. The amount of $LiBr \cdot H_2O$ added was 10 mass% with respect to the total amount of the solid electrolyte and $LiBr \cdot H_2O$.

Example 2

A solid electrolyte was obtained in a similar manner to that of Example 1, except that the amount of $LiBr \cdot H_2O$ added was 20 mass%.

Example 3

A solid electrolyte was obtained in a similar manner to that of Example 1, except that the amount of $LiBr \cdot H_2O$ added was 30 mass%.

Example 4

A solid electrolyte was obtained in a similar manner to that of Example 1, except that the amount of $LiBr \cdot H_2O$ added was 40 mass%.

Comparative Example 1

A solid electrolyte was obtained in a similar manner to that of Example 1, except that $LiBr \cdot H_2O$ was not added.

Comparative Example 2

A solid electrolyte was obtained in a similar manner to that of Example 1, except that the amount of $LiBr \cdot H_2O$ added was 50 mass%.

Evaluation

The solid electrolytes obtained in the examples and the comparative examples were subjected to thermogravimetry using the above-described method, and percentages of weight loss during heating from 25°C to 400°C were measured. Table 1 shows percentages of weight loss that were measured every 50°C. Also, Table 2 shows percentages of weight loss when the solid electrolytes were heated from 100°C to 170°C in thermogravimetry that was performed in accordance with the above-described method. Furthermore, solid-state batteries were produced in the following manner using the solid electrolytes obtained in the examples and the comparative examples, and the reaction resistance was measured. Table 1 shows the results.

Measurement of Reaction Resistance

A positive electrode was prepared in accordance with a common method using each of the solid electrolytes of the examples and the comparative examples. Specifically, a positive electrode mixture was prepared by using and mixing together 60 parts of $LiNi_{1/3}Co_{1/3}Mn_{1/3}O_2$, 37 parts of the solid electrolyte, and 3 parts of a conductive carbon material, and this positive electrode mixture was formed into a positive electrode layer.

A negative electrode mixture was prepared by using and mixing together 47.5 parts of a Si powder, 47.5 parts of the solid electrolyte, and 5 parts of a conductive carbon material, and this negative electrode mixture was formed into a negative electrode layer.

Next, the positive electrode, each of the solid electrolytes of the examples and the comparative examples, and the negative electrode were stacked in this order and press-formed to produce a solid-state battery. With respect to this solid-state battery, three cycles of charging and discharging, and charging to 3.7 V after the third cycle, were performed, and then, AC impedance was measured. Specifically, with the use of an electrochemical measurement system in which a potentiostat Solartron 1280Z and a frequency response analyzer Solartron 1260, both manufactured by Solartron Analytical, were combined, an AC amplitude of 10 mV was applied to a battery cell after the charging and discharging, with a DC bias set to the open-circuit voltage of the battery cell, and AC impedance measurements were conducted over a frequency range from $1.0 \times 10^6$ to $1.0 \times 10^{-1}$ Hz. The diameter of an arc of a complex impedance plot obtained by the measurements was taken as reaction resistance ($\Omega$).

Table 1

| | Amount of LiBr·H$_2$O added (mass%) | Weight loss rate (%) | | | | | | | | | Reaction resistance ($\Omega$) |
|---|---|---|---|---|---|---|---|---|---|---|---|
| | | 25 (°C) | 50 (°C) | 100 (°C) | 150 (°C) | 200 (°C) | 250 (°C) | 300 (°C) | 350 (°C) | 400 (°C) | |
| Ex. 1 | 10 | 0.00 | 0.26 | 1.44 | 2.85 | 4.03 | 5.43 | 6.53 | 7.23 | 764 | 423.3 |
| Ex. 2 | 20 | 0.00 | 0.27 | 2.80 | 4.31 | 4.86 | 5.95 | 6.44 | 7.02 | 7.38 | 153.8 |
| Ex. 3 | 30 | 0.00 | -0.05 | 1.46 | 4.04 | 4.52 | 4.93 | 5.73 | 6.23 | 6.42 | 697.1 |
| Ex. 4 | 40 | 0.00 | 0.04 | 2.03 | 5.90 | 6.68 | 6.92 | 7.93 | 9.18 | 9.46 | 822.1 |
| Com. Ex. 1 | 0 | 0.00 | 0.09 | 0.33 | 0.75 | 1.18 | 1.53 | 1.98 | 2.43 | 2.66 | 1225.0 |
| Com. Ex. 2 | 50 | 0.00 | 0.02 | 2.28 | 5.88 | 8.08 | 8.18 | 9.29 | 9.56 | 9.74 | 4741.0 |

Table 2

| | Amount of LiBr·H$_2$O added (mass%) | Weight loss rate (%) 100°C to 170°C |
|---|---|---|
| Ex. 1 | 10 | 1.80 |
| Ex. 2 | 20 | 1.82 |
| Ex. 3 | 30 | 3.01 |
| Ex. 4 | 40 | 4.55 |
| Com. Ex. 1 | 0 | 0.60 |
| Com. Ex. 2 | 50 | 4.80 |

As is clear from the results shown in Table 1, it was found that the solid-state batteries that were produced using the solid electrolytes obtained in the examples had lower reaction resistances than the solid-state batteries that were produced using the solid electrolytes obtained in the comparative examples.

Industrial Applicability

According to the present invention, a sulfide solid electrolyte that can reduce the reaction resistance between an active material and the sulfide solid electrolyte is provided.

**Claims**

1. A sulfide solid electrolyte having a weight loss rate of 2.7% or more and 9.6% or less, the weight loss rate being measured by heating the sulfide solid from 25°C to 400°C at a heating rate of 10°C/min in thermogravimetry.

2. The sulfide solid electrolyte according to claim 1, comprising elemental lithium (Li), elemental phosphorus (P), elemental sulfur (S), an elemental halogen (X), and elemental oxygen (O).

3. The sulfide solid electrolyte according to claim 2, wherein the elemental halogen (X) is at least one of elemental chlorine (Cl), elemental bromine (Br), and elemental I (iodine).

4. An electrode mixture comprising the sulfide solid electrolyte according to any one of claims 1 to 3 and an active material.

5. A solid-state battery comprising a positive electrode layer, a negative electrode layer, and a solid electrolyte layer located between the positive electrode layer and the negative electrode layer, the solid electrolyte layer containing the sulfide solid electrolyte according to any one of claims 1 to 3.

## INTERNATIONAL SEARCH REPORT

| International application No. |
| --- |
| PCT/JP2020/033444 |

**A. CLASSIFICATION OF SUBJECT MATTER**
H01M 4/62(2006.01)i; H01M 10/052(2010.01)i; H01M 10/0562(2010.01)i; H01B 1/06(2006.01)i; H01B 1/10(2006.01)i
FI: H01M10/0562; H01B1/06 A; H01B1/10; H01M4/62 Z; H01M10/052
According to International Patent Classification (IPC) or to both national classification and IPC

**B. FIELDS SEARCHED**

Minimum documentation searched (classification system followed by classification symbols)
H01M4/62; H01M10/052; H01M10/0562; H01B1/06; H01B1/10

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2018-180017 A (NGK SPARK PLUG CO., LTD.) 22 November 2018 (2018-11-22) claims 1-3, paragraphs [0010]-[0012], [0026], [0028]-[0029] | 1-5 |
| A | WO 2018/131181 A1 (NGK SPARK PLUG CO., LTD.) 19 July 2018 (2018-07-19) claims, paragraphs [0011], [0013], [0018]-[0019], [0064]-[0068], fig. 6-8, 13-14 | 1-5 |
| A | JP 2018-186016 A (NGK SPARK PLUG CO., LTD.) 22 November 2018 (2018-11-22) claims | 1-5 |
| A | WO 2017/159665 A1 (IDEMITSU KOSAN CO., LTD.) 21 September 2017 (2017-09-21) claims, paragraph [0007] | 1-5 |

☐ Further documents are listed in the continuation of Box C.    ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 11 November 2020 (11.11.2020) | 24 November 2020 (24.11.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/033444

| Patent Documents referred in the Report | Publication Date | Patent Family | Publication Date |
|---|---|---|---|
| JP 2018-186017 A | 22 Nov. 2018 | (Family: none) | |
| WO 2018/131181 A1 | 19 Jul. 2018 | (Family: none) | |
| JP 2018-186016 A | 22 Nov. 2018 | (Family: none) | |
| WO 2017/159665 A1 | 21 Sep. 2017 | (Family: none) | |

Form PCT/ISA/210 (patent family annex) (January 2015)

**EP 4 030 509 A1**

REFERENCES CITED IN THE DESCRIPTION

**Patent documents cited in the description**

- JP 2012099323 A
- US 2014072875 A1
- JP 2015201388 A